(19) Europäisches Patentamt

European Patent Office

Office européen des brevets

(11) **EP 1 457 055 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(21) Anmeldenummer: **02774338.4**

(22) Anmeldetag: **12.09.2002**

(51) Int Cl.:
*H04N 7/34* (2006.01)    *H04N 7/26* (2006.01)

(86) Internationale Anmeldenummer:
**PCT/DE2002/003390**

(87) Internationale Veröffentlichungsnummer:
**WO 2003/049452 (12.06.2003 Gazette 2003/24)**

(54) **VERFAHREN ZUR GERICHTETEN PRÄDIKTION EINES BILDBLOCKES**

METHOD FOR CONDUCTING A DIRECTED PREDICTION OF AN IMAGE BLOCK

PROCEDE DE PREDICTION DIRIGEE D'UN BLOC D'IMAGES

(84) Benannte Vertragsstaaten:
**AT BE BG CH CY CZ DE DK EE ES FI FR GB GR IE IT LI LU MC NL PT SE SK TR**

(30) Priorität: **30.11.2001 DE 10158658**

(43) Veröffentlichungstag der Anmeldung:
**15.09.2004 Patentblatt 2004/38**

(73) Patentinhaber: **ROBERT BOSCH GMBH**
**70442 Stuttgart (DE)**

(72) Erfinder:
• **DAHLHOFF, Achim**
**52072 Aachen (DE)**
• **WIEN, Mathias**
**52064 Aachen (DE)**

(56) Entgegenhaltungen:
**EP-A- 1 146 748**       **WO-A-91/14340**
**WO-A-98/41025**

• **G. BJONTEGAARD (ED): "H.26L TEST MODEL LONG TERM NUMBER 8 (TML-8) DRAFT0 " ITU-T TELECOMMUNICATION STANDARIZATION SECTOR OF ITU, 2. April 2001 (2001-04-02), Seiten 16-19, XP002250455 GENEVA, CH in der Anmeldung erwähnt**
• **PATENT ABSTRACTS OF JAPAN vol. 013, no. 468 (E-834), 23. Oktober 1989 (1989-10-23) & JP 01 183276 A (FUJITSU LTD), 21. Juli 1989 (1989-07-21)**

**Beschreibung**

Stand der Technik

Die Erfindung geht aus von einem Verfahren zur gerichteten Prädiktion eines aus Bildpunkten bestehenden Bildblockes, insbesondere für die Intra-Prädiktion von Bildblöcken mit einer Größe von mehr als 4 x 4 Bildpunkten.

Aus [1], http://standard.pictel.com/ftp/video-site/0109_San/, insbesondere Seiten 9 bis 11, ist es bekannt, für den Videocodierungs-Standard H.26L eine Intra-Prädiktion auf 4 x 4 Pixel(Bildpunkt)-Blöcken oder auf 16 x 16 Pixel-Blöcken durchzuführen. Intra-Prädiktion bedeutet, daß zur Generierung eines Prädiktionssignals nur bereits übertragene Informationen eines aktuellen Bildes herangezogen werden (z.B. wird das erste Bild einer Video-Sequenz immer "Intra"codiert). Zur 4 x 4-Prädiktion stehen bei [1] sechs Modi zur Verfügung, die sich in der Richtung, aus der die Prädiktion erfolgt, unterscheiden. Dabei werden die Randpixel bereits prädizierter (codierter) Nachbarbildblöcke zur Prädiktion herangezogen.

Vorteile der Erfindung

Mit den Maßnahmen des Anspruchs 1 werden zur Prädiktion eines aktuellen Bildblockes ebenfalls Randbildpunkte mindestens eines bereits prädizierten Nachbarbildblockes herangezogen. Jedoch werden zusätzlich jene zur Prädiktion verwendeten Bildpunkte in Abhängigkeit der Prädiktionsrichtung entlang eines Blockrandes des aktuell zu prädizierenden Bildblockes vorgefiltert. Diese Vorfilterung führt zu verbesserten Prädiktionseigenschaften, insbesondere für Blöcke mit großer Kantenlänge, d.h. einer Kantenlänge von mehr als vier Bildpunkten.

Die Erfindung geht aus von der Erkenntnis, daß wenn eine gerichtete Prädiktion für Blockgrößen mit mehr als 4 x 4 Bildpunkten, z.B. 4 x 8, 8 x 4, 8 x 8, 16 x 8, ..., 16 x 16 eingesetzt werden soll, im prädizierten Bildblock sehr prägnante Strukturen entstehen, die zu starken Artefakten im rekonstruierten Bild führen. Durch die erfindungsgemäße Vorfilterung werden diese Artefakte durch Glättung des Prädiktionssignals verhindert, was zu einer subjektiven und objektiven Verbesserung des Codierverfahrens für die Übertragung der derart prädizierten Bildblöcke führt.

Mit den Maßnahmen des Anspruchs 2 werden die zur Prädiktion verwandten Bildpunkte eines Nachbarbildblockes zu einem Prädiktionsvektor zusammengefaßt, und es wird eine Tiefpaßfilterung entlang der Richtung des Prädiktionsvektors vorgenommen. Diese Maßnahme vereinfacht den Verarbeitungsaufwand gegenüber einer möglichen Einzelfilterung.

Durch die stärkste Gewichtung der Tiefpaßfilterung an der Nullposition gemäß Anspruch 3, d.h. an der Position eines gerade zu prädizierenden Bildpunktes, bleibt der Verlauf des Prädiktionsvektors erhalten, die Filterung führt aber zu einer Glättung des Vektors. Der Einfluß der benachbarten Prädiktionswerte auf die aktuelle Position wird geringer, je weiter sie von der aktuellen Position entfernt sind.Diese Vorgehensweise dämpft die Artefaktbildung besonders wirkungsvoll bei ansteigenden Blockgrößen.

Die Maßnahmen des Anspruchs 4 tragen ebenfalls vorteilhaft zur Artefaktunterdrückung bei..

Die Ansprüche 5 bis 7 zeigen vorteilhafte Maßnahmen der Blockrandbehandlung auf. Insbesondere durch die Fortsetzung des Prädiktionsvektors mit seinen Randwerten vereinfacht sich der Verarbeitungs- und Speicheraufwand, was zur Steigerung der Codiereffizienz führt.

Zeichnungen

Anhand der Zeichnungen werden Ausführungsbeispiele der Erfindung erläutert. Es zeigen

Figur 1 einen zu prädizierenden Bildblock mit seinen Nachbarbildblöcken,
Figur 2 einen aktuell zu prädizierenden Bildblock mit seinen Einzelbildpunkten und den Bildpunkten der Nachbarbildblöcke an seinen Kanten,
Figur 3 die Prädiktionsrichtungen der verschiedenen Prädiktionsmodi,
Figur 4 einen Bildblock der Größe 4 x 4 Bildpunkte mit prädizierten Bildpunkten unter Verwendung von bereits prädizierten Bildpunkten eines Nachbarblockes,
Figur 5 einen Bildblock der Größe 8 x 8 Bildpunkte mit ungefilterter Prädiktion,
Figur 6 den Bildblock aus Figur 5, jedoch mit erfindungsgemäßer Vorfilterung.

Beschreibung von Ausführungsbeispielen

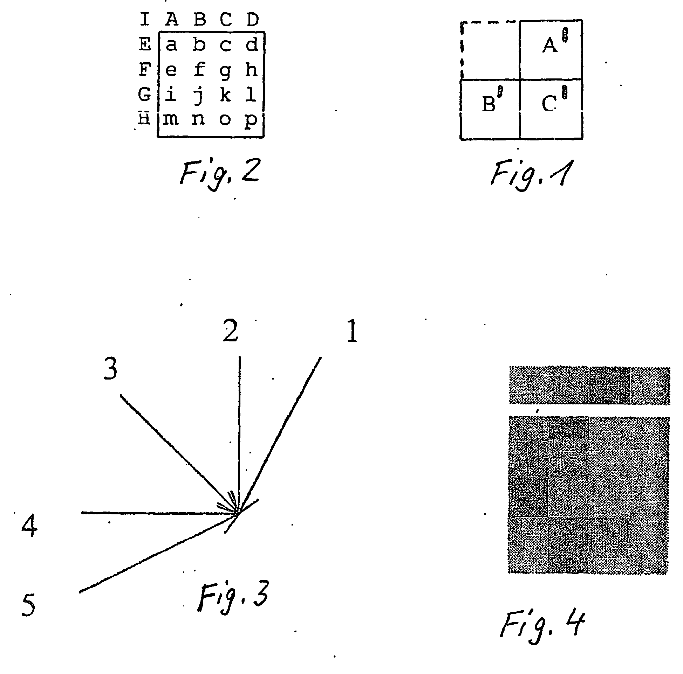

Bevor auf die eigentliche Erfindung eingegangen wird, wird zum besseren Verständnis die aus [1] bekannte richtungsabhängige Intra-Prädiktion näher erläutert. Die Intra-Prädiktion gemäß [1] wird auf 4 x 4-Pixel-Blöcken oder auf 16 x 16-Pixel-Blöcken durchgeführt. Zur 4 x 4-Prädiktion stehen sechs Modi zur Verfügung, die sich in der Richtung, aus der die Prädiktion erfolgt, unterscheiden. Dabei werden die Randpixel (Randbildpunkte) bereits codierter Nachbarbildblöcke zur Prädiktion.herangezogen. Mögliche Nachbarblöcke A' und B' zu dem aktuell zu prädizierenden Bildblock C' sind in Figur 1 dargestellt. Figur 2 zeigt den aktuellen Bildblock C' mit seinen Bildpunkten a, b, c, ..., p mit den Randpixeln der Nachbarbildblöcke und zwar A, B, C, D des nach oben anschließenden Bildblockes A' bzw. E, F, G, H für den nach links anschließenden Nachbarbildblock B' sowie I des am linken oberen Eck anschließenden Nachbarbildblockes (in Figur 1 gestrichelt).

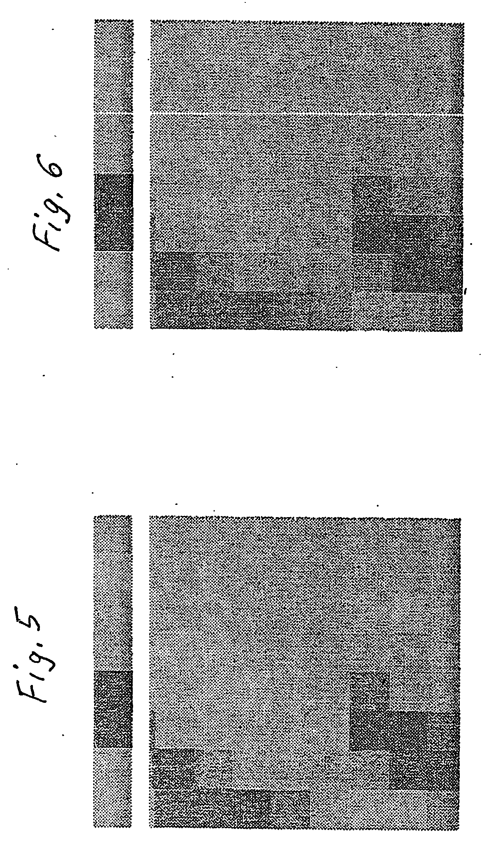

Neben der DC (Gleichanteile)-Prädiktion, in der der Mittelwert aus den Positionen A bis H als Prädiktion für alle Pixel des Bildblocks C' verwendet wird, stehen fünf Modi mit verschiedenen Prädiktionsrichtungen zur Verfügung. Neben horizontaler und vertikaler Prädiktion sind auch drei schräge Prädiktionsrichtungen möglich. Die Prädiktionsrichtungen sind in Figur 3 dargestellt. In Figur 4 ist ein Beispiel für die Prädiktion mit dem Modus 1 gegeben. In diesem Modus werden nur die Pixel A bis D zur Prädiktion verwendet. In Modus 1 erfolgt die Prädiktion wie folgt:

| Präd. von Pixel | durch |
|---|---|
| a | (A+B) /2 |
| e | B |
| b,i | (B+C)/2 |
| f,m | C |
| c,j | (C+D)/2 |
| d,g,h,k,l,n,o,p | D |

Die Prädiktion auf der Basis von 16 x 16 Pixel-Blöcken wird in Bildbereichen mit wenig Aktivität eingesetzt. Hier stehen die DC-Prädiktion, horizontal und vertikale Prädiktion sowie eine etwas aufwendigere "plane"- Prädiktion zur Verfügung. Für eine vollständige Beschreibung der Intra-Prädiktionsmethoden wird auf das H.26L-Test-Modell (TML) [1] verwiesen.

Die für die 4 x 4- Prädiktion vorgestellten Verfahren lassen sich direkt auf andere Blockgrößen erweitern. Hierzu werden die Prädiktionen entsprechend fortgesetzt.

Soll eine gerichtete Prädiktion der Art, wie sie für 4x4-Bildblöcke zuvor definiert wurde, für Bildblöcke mit mehr als 4 x 4 Bildpunkten, z.B. 4 x 8, 8 x 4, 8 x 8, 16 x 8, ..., 16 x 16, eingesetzt werden, so können im prädizierten Bildblock sehr prägnante Strukturen entstehen, die zu starken Artefakten im rekonstruierten Bild führen. Die Maßnahmen nach der Erfindung verhindern diese Artefakte und führen dadurch zu einer subjektiven wie objektiven Verbesserung des Codierungsverfahrens.

Die Beschreibung geht von den im TML [1] für die Intra-Codierung von 4 x 4-Bildblöcken verwendeten gerichteten Prädiktions-Modi aus. Es werden Bildblöcke der Größen 4 x 8, 8 x 4, 8 x 8, 8 x 16, 16 x 8 und 16 x 16 betrachtet. Die Filterung wird an den Kanten mit Länge > 4 Pixel, d.h. für Kanten der Länge 8 oder 16 Pixel eingesetzt. Das Verfahren kann ebenso für andere Blockgrößen und Prädiktionsrichtungen verwendet werden.

Im folgenden werden die Pixel des aktuellen Bildblocks der Größe M Zeilen und N Spalten mit

$$P(i,j), \qquad i = 0, \ldots, N-1, \quad j = 0, \ldots, M-1$$

bezeichnet. Die zur Prädiktion verwendeten Pixel der Nachbarbildblöcke befinden sich an den Positionen $P(-1,j)$ und $P(i,-1)$. Sie werden im folgenden im Prädiktionsvektor $V(n)$ der Länge $N_f$ zusammengefaßt. Im Fall der zuvor vorgestellten Modus-1- Prädiktion für 4 x 4 Blöcke ist also mit $N_f = 4$:

$$V(n) = P(n,-1) = [A,B,C,D], \qquad n = 0, \ldots 3.$$

Zur Prädiktion eines Bildblockes wird nicht $V(n)$, sondern eine gefilterte Version $V_f(n)$ verwendet. Zur Filterung wird ein (Tiefpaß-)Filter geeigneter Länge L herangezogen, z.B.:

| Kantenlänge | Filter h(n). | Filterlänge L |
|:---:|:---:|:---:|
| 8 | 7/32, 18/32, 7/32 | 3 |
| 16 | 3/32, 7/32, 12/32, 7/32, 3/32 | 5 |

Die Vorfilterung erfolgt in Abhängigkeit der Prädiktionsrichtung. Im vorgestellten Modus 1 entlang des oberen Blockrandes des aktuell zu prädizierenden Bildblockes C'. Die Vorfilterung wird entlang der Richtung des Prädiktionsvektors V(n) vorgenommen.

Durch die Tiefpaßfilterung wird eine Glättung des Prädiktionssignals erreicht. Es bestehen mehrere Möglichkeiten zur Randbehandlung.

- Konstante Fortsetzung mit V(0) und $V(N_f-1)$ an den Rändern
- Für den rechten und unteren Rand Verwendung von bereits codierten Pixeln, die über den Blockrandbereich hinausgehen, z.B. V(n) = P(n,-1) mit n = N, ... $N_f$-1
- Für den linken und oberen Rand: Fortsetzung des Prädiktionsvektors entlang der Kante, z.B.:

$$V(n) = P(n,-1), \text{ für } n = 0, \ldots N_f-1$$

$$V(n) = P(-1,-(n+2)), \text{ für } n = -int(L/2), \ldots, -1$$

Hier bedeutet int(x) "rounding by truncation".

Die Wirkung der Vorfilterung wird in Figur 5 beispielhaft für einen 8 x 8-Bildblock bei einer Prädiktion mit Modus 1 gezeigt. Figur 5 zeigt die ungefilterte Prädiktion, Figur 6 zeigt den prädizierten Bildblock bei Vorfilterung mit dem oben für die Kantenlänge 8 Pixel gegebenen Filter der Länge 3.

Nachfolgend wird ein mögliches Ausführungsbeispiel der Vorfilterung angegeben.

Gegeben ist ein 8 x 8-Block P(i,j), i,j = 0, ..., 7, mit einem Prädiktionsvektor V(n), n = 0, ..., 7.

Es werde mit einem 3-Tap-Filter für Bildblöcke der Kantenlänge 8 gefiltert, mit den Filterkoeffizienten h (n) = (7 18 7)/32.

Die Vorfilterung mit konstanter Fortsetzung an den Rändern ergibt:

$$V_f(0) = (7*V(0) + 18*V(0) + 7*V(1))/32$$

$$V_f(1) = (7*V(0) + 18*V(2) + 7*V(3))/32$$

$$V_f(2) = (7*V(1) + 18*V(3) + 7*V(4))/32$$
$$\ldots$$

$$V_f(7) = (7*V(6) + 18*V(7) + 7*V(7))/32$$

Der Vektor $V_f(n)$, n = 0, ..., 7 wird dann zur Prädiktion des aktuellen Bildblocks C' eingesetzt.

Wie Fig. 5 zeigt sind bei grober Quantisierung ohne die Verwendung des erfindungsgemässen Verfahrens starke Artefakte der Prädiktion sichtbar. Mit dem erfindungsgemässen Verfahren zeigt sich statt dessen ein weicher Verlauf (bei Filterung mit einem Tiefpass). In Bildblöcken in denen alle AC (Wechselanteil)-Koeffizienten zu Null quatisiert wurden, lässt sich bei Kenntnis des Prädiktionsmodus und des verwendeten Filters der Bildblock aus den Randpixeln der Nachbarbildblöcke direkt bestimmen.

Literatur:

[1] G. Bjontegaard und Thomas Wiegand (eds.), 'H.26L.Test Model Long-Term (TML) 8', Doc. VCEG-N10, ITU-T Q6/SG16 VCEG, 14. Meeting, Santa Barbara, CA, September 2001

**Patentansprüche**

1.  Verfahren zur gerichteten Prädiktion eines aus Bildpunkten (a, b, ..., p) Bildblockes (C'), insbesondere für die Intra-Prädiktion von Bildblöcken mit einer Größe von mehr als 4 x 4 Bildpunkten, wobei Randbildpunkte (A, B, C, D; E, F, G, H) mindestens eines bereits prädizierten Nachbarbildblockes (A', B') zur Prädiktion eines aktuellen Bildblockes (C') herangezogen werden und wobei jene Bildpunkte, die in Abhängigkeit der Prädiktionsrichtung zur Prädiktion verwendet werden, entlang eines Blockrandes des aktuellen zu prädizierenden Bildblockes (C') Tiefpaß vorgefiltert werden.

2.  Verfahren nach Anspruch 1, **dadurch gekennzeichnet, daß** die zur Prädiktion des aktuellen Bildblockes verwendeten Bildpunkte des mindestens einen Nachbarbildblockes zu einem Prädiktionsvektor zusammengefaßt werden und daß eine Tiefpaßfilterung der für die Prädiktion verwendeten Bildpunkte entlang der Richtung des Prädiktionsvektors vorgenommen wird.

3.  Verfahren nach Anspruch 2, **dadurch gekennzeichnet, daß** bei der Tiefpaßfilterung die Nullposition am stärksten gewichtet wird.

4.  Verfahren nach einem der Ansprüche 1 bis 3, **dadurch gekennzeichnet, daß** für die Tiefpaßfilterung auch Bildpunkte verwendet werden, die über den Blockrandbereich des aktuellen Bildblockes hinausgehen.

5.  Verfahren nach Anspruch 4, **dadurch gekennzeichnet, daß** die über den Blockrandbereich hinausgehenden Bildpunkte für die Prädiktion durch Fortsetzung des Prädiktionsvektors an den Blockrändern gewonnen werden.

6.  Verfahren nach Anspruch 5, **dadurch gekennzeichnet, daß** zur Fortsetzung des Prädiktionsvektors die Vektorkomponentenwerte am Anfang bzw. Ende des Prädiktionsvektors verwendet werden.

7.  Verfahren nach Anspruch 5, **dadurch gekennzeichnet, daß** zur Fortsetzung des Prädiktionsvektors bereits prädizierte Bildpunkte von Nachbarbildblöcken herangezogen werden, die nicht unmittelbar einen Blockrand mit dem aktuellen zu prädizierenden Bildblock gemeinsam haben.

**Claims**

1.  Method for directed prediction of an image block (C') from pixels (a, b, ..., p), in particular for the intraprediction of image blocks with a size of more than 4 x 4 pixels, with edge pixels (A, B, C, D; E, F, G, H) of at least one already predicted adjacent image block (A',B') being used for prediction of a current image block (C'), and with those pixels which are used for prediction as a function of the prediction direction being initially low-pass filtered along one block edge of the image block (C') that is currently to be predicted.

2.  Method according to Claim 1, **characterized in that** those pixels in the at least one adjacent image block which are used to predict the current image block are combined to form a prediction vector, and **in that** the pixels which are used for prediction are low-pass filtered along the direction of the prediction vector.

3.  Method according to Claim 2, **characterized in that** the null position is most heavily weighted in the low-pass filtering.

4.  Method according to one of Claims 1 to 3,
    **characterized in that** pixels which go beyond the block edge area of the current image block are also used for the low-pass filtering.

5.  Method according to Claim 4, **characterized in that** the pixels which go beyond the block edge area are obtained, for the prediction, by continuation of the prediction vector at the block edges.

6. Method according to Claim 5, **characterized in that** the vector component values at the start and end of the prediction vector are used to continue the prediction vector.

7. Method according to Claim 5, **characterized in that** already predicted pixels from adjacent image blocks which do not directly have a common block edge with the current image block to be predicted are used to continue the prediction vector.

**Revendications**

1. Procédé de prédiction orientée d'un bloc d'image (C') constitué d'éléments d'image (a, b, ..., p), en particulier pour l'intra-prédiction de blocs d'image ayant une taille supérieure à 4 x 4 éléments d'image, selon lequel on extrait pour la prédiction d'un bloc d'image actuel (C') des éléments d'image périphériques (A, B, C, D ; E, F, G, H) d'au moins un bloc d'image voisin (A', B') déjà prédit, et on préfiltre avec un filtre passe-bas le long d'un bord du bloc d'image (C') à prédire actuellement, chacun des éléments d'image utilisés pour la prédiction en fonction de la direction de prédiction.

2. Procédé selon la revendication 1, **caractérisé en ce que** les éléments d'image d'au moins un bloc d'image voisin, utilisés pour la prédiction du bloc d'image actuel, sont rassemblés en un vecteur de prédiction et un filtrage passe-bas des éléments d'image utilisés pour la prédiction est réalisée suivant la direction du vecteur de prédiction.

3. Procédé selon la revendication 2, **caractérisé en ce que** la position zéro est pondérée au maximum lors de la filtration passe-bas.

4. Procédé selon l'une des revendications 1 à 3, **caractérisé en ce que** le filtrage passe-bas utilise également des éléments d'image dépassant la zone périphérique du bloc d'image actuel.

5. Procédé selon la revendication 4, **caractérisé en ce que** les éléments d'image dépassant la zone périphérique sont collectés pour la prédiction en prolongeant le vecteur de prédiction au niveau des bords de blocs.

6. Procédé selon la revendication 5, **caractérisé en ce que** pour prolonger le vecteur de prédiction, on utilise les valeurs de composante de vecteur au début ou à la fin du vecteur de prédiction.

7. Procédé selon la revendication 5, **caractérisé en ce que** pour continuer le vecteur de prédiction, on utilise des éléments d'image déjà prédits de blocs d'image voisins, qui n'ont pas directement un bord de bloc en commun avec le bloc d'image devant être prédit actuellement.

```
I  A  B  C  D
E |a  b  c  d|
F |e  f  g  h|
G |i  j  k  l|
H |m  n  o  p|
```

Fig. 2

```
┌ ─ ─ ┬─────┐
│     │  A  │
├ ─ ─ ┼─────┤
│  B  │  C  │
└─────┴─────┘
```

Fig. 1

Fig. 3

Fig. 4

Fig. 6

Fig. 5